# EUROPÄISCHE PATENTANMELDUNG

(11) **EP 1 083 412 A1**
(43) Veröffentlichungstag der Anmeldung: **14.03.2001**
(21) Anmeldenummer: 99117605.8
(22) Anmeldetag: 07.09.1999
(51) Int. Cl.: G01F 23/26

(54) **Vorrichtung zur Bestimmung einer physikalischen Grösse eines flüssigen oder festen Mediums**

(71) Anmelder: ENDRESS + HAUSER GMBH + CO., D-79689 Maulburg (DE)
(72) Erfinder: Krause, Michael, 79585 Steinen (DE)
(74) Vertreter: Andres, Angelika

(57) **Zusammenfassung**

Aufgabe der vorliegenden Erfindung ist es, eine Vorrichtung zur Bestimmung einer physikalischen Größe eines Mediums (2) vorzuschlagen, bei der die Bildung von Ansatz oder Ablagerungen des Mediums (2) an einem Teilelement (4) der Vorrichtung (1), das mit dem Medium (2) in Kontakt kommt, verringert oder vermieden wird.

Hierzu ist zumindest das Teilelement (4) mit einer mikrostrukturierten Oberflächenschicht (7) versehen.

## Beschreibung

Die Erfindung betrifft eine Vorrichtung zur Bestimmung einer physikalischen Größe eines flüssigen oder festen Mediums in einem Behälter oder in einem Behältnis.

Zur Bestimmung physikalischer Meßgrößen werden die unterschiedlichsten Typen von Sensoren eingesetzt. Bei Anwendungen, bei denen zumindest ein Teilelement des Sensors in direkten oder indirekten Kontakt mit dem zu messenden Medium kommt, besteht die Gefahr, daß sich an dem entsprechenden Sensorelement Ablagerungen bilden. Diese Ablagerungen beeinträchtigen die Meßgenauigkeit oder die Funktion des Sensors zum Teil ganz erheblich.

Der Erfindung liegt die Aufgabe zugrunde, eine Vorrichtung vorzuschlagen, bei der die Bildung von Ablagerungen an dem Sensor verringert wird.

Die Aufgabe wird dadurch gelöst, daß die Vorrichtung aus mehreren Teilelementen besteht, wobei zumindest ein Teilelement mit dem flüssigen oder festen Medium mittelbar oder unmittelbar in Kontakt kommt, und wobei das zumindest eine Teilelement eine mikrostrukturierte Oberflächenschicht aufweist. Die mikrostrukturierte Oberflächenschicht verhindert oder vermindert die Ansatzbildung an dem Sensor. Desweiteren wird verhindert, daß sich bei Kontakt mit einem viskosen Medium, z. B. Honig, ein Oberflächenfilm auf dem entsprechenden Teilelement des Sensors bildet.
Der Grund für die geringe Ansatzbildung ist darin zu sehen, daß die Adhäsionskräfte zwischen Sensorelement und Medium durch die Oberflächenrauhigkeit des Sensorelements stark reduziert sind. Selbst wenn sich Ansatz bildet, so läßt sich dieser aufgrund der geringen Adhäsionskräfte nachfolgend wieder leicht entfernen. Ein wichtiger Nebeneffekt dieser quasi selbstreinigenden Oberflächenstruktur ist neben der gleichbleibend guten Meßgenauigkeit die erhöhte Lebensdauer des Sensors. Die mikrostrukturierte Oberfläche übernimmt also neben der (Selbst-)Reinigungsfunktion auch eine Schutzfunktion.

Gemäß einer vorteilhaften Weiterbildung der erfindungsgemäßen Vorrichtung ist die mikrostrukturierte Schicht als Oberflächenbeschichtung auf das zumindest eine Teilelement aufgebracht. Bevorzugt ist dabei wegen der Einfachheit der Applikation, daß es sich bei der Oberflächenbeschichtung um eine Lack- oder Farbschicht handelt, die auf das zumindest eine Teilelement aufgetragen ist. Möglich ist es jedoch auch, die Oberflächenschicht durch eine andere Fertigungstechnik aufzubringen. Als Beispiel sei hier das Aufdampfen genannt.

Eine vorteilhafte Ausgestaltung der erfindungsgemäßen Vorrichtung schlägt vor, daß die mikrostrukturierte Oberfläche Erhebungen und Vertiefungen aufweist, wobei der Abstand zwischen den Erhebungen im Bereich von 5 bis 200 µm und die Höhe der Erhebungen im Bereich von 5 bis 100µm liegt. Wie die mikrostrukturierte Oberfläche ausgebildet sein kann, ist im Detail der EP 0 772 514 B1 zu entnehmen.

Bevorzugt ist die erfindungsgemäße Vorrichtung im Bereich der kontinuierlichen Füllstandsmessung oder der Grenzfüllstandsmessung einsetzbar. Hier werden Meßsysteme eingesetzt, die unterschiedliche physikalische Größen messen und anhand der gemessenen Größen die gewünschte Information über den Füllstand ableiten. Neben mechanischen Abtastern werden kapazitive, konduktive oder hydrostatische Meßsonden eingesetzt, ebenso wie Detektoren, die auf der Basis von Ultraschall oder Mikrowellen arbeiten. Wenig kritisch sind natürlich Sensoren, die nicht in direkten Kontakt mit dem Füllgut kommen, obwohl auch an z. B. Mikrowellenantennen, die oberhalb des zu messenden Füllguts angeordnet sind, Verschmutzungen auftreten können. Bei anderen Sensortypen, die zwecks Meßwerterfassung in das Füllgut eintauchen, ist die Ansatzbildung üblicherweise besonders kritisch.

Problematisch ist die Ansatzbildung aber in jedem Fall bei kapazitiven Sensoren und bei TDR-Sensoren. Eine Anordnung zur kapazitiven Füllstandsmessung eines Mediums, das in einem nicht leitfähigen Behälter angeordnet ist, ist beispielsweise aus der DE 38 24 231 C2 bekannt geworden. Als weiteres Beispiel für kapazitive Sensoren seien die Füllstandssensoren MULTICAP genannt, die von der Anmelderin hergestellt und vertrieben werden. Bei Ansatz oder Anhaftungen an der Sonde, also dem Teilelement, das in direkten Kontakt mit dem Füllgut kommt, wird die Meßgenauigkeit erheblich beeinflußt. Meßfehler in der Größenordnung von ca. 5% treten auf.

Bei einer Vielzahl von Einsatzgebieten, beispielsweise in der Petrochemie, Chemie und Lebensmittelindustrie, sind hochgenaue Messungen des Füllstandes von Flüssigkeiten oder Schüttgütern in Behältern (Tanks, Silos, usw.) gefordert. Deshalb kommen hier in zunehmendem Maße TDR-Sensoren zum Einsatz, bei denen kurze elektromagnetische Hochfrequenzimpulse oder kontinuierliche Mikrowellen in eine leitende Seil- oder Stabsonde eingekoppelt und mittels der Sonde in den Behälter, in dem das Füllgut gelagert ist, hineingeführt werden. TDR steht übrigens als Abkürzung für Time Domain Reflectometry. Physikalisch gesehen wird bei dieser Meßmethode der Effekt ausgenutzt, daß an der Grenzfläche zwischen zwei verschiedenen Medien, z. B. Luft und Öl oder Luft und Wasser, infolge der sprunghaften Änderung (Diskontinuität) der Dielektrizitätszahlen beider Medien ein Teil des geführten Hochfrequenzimpulses bzw. der geführten Mikrowelle reflektiert und über die Sonde zurück in eine Empfangsvorrichtung geleitet wird. Der reflektierte Anteil ist dabei um so größer, je größer der Unterschied in den Dielektrizitätszahlen der beiden Medien ist. Anhand der Laufzeit des reflektierten Anteils des Hochfrequenzimpulses bzw. der Mikrowelle läßt sich die Entfernung zur Grenzfläche bestimmen. Bei Kenntnis der Leerdistanz des Behälters kann der Füllstand des Füllguts in dem Behälter berechnet werden.

Es hat sich herausgestellt, daß die Meßgenauigkeit von TDR-Sensoren durch Ansatzbildung relativ stark herabgesetzt wird. So treten auch hier Meßfehler bis ca. 5% auf. Ein TDR-Sensor, der in Verbindung mit der erfindungsgemäßen Vorrichtung verwendet werden kann, ist übrigens in der US 5,361,070 beschrieben. Als weiteres Beispiel sei der TDR-Sensor LEVELFLEX genannt, der von der Anmelderin hergestellt und vertrieben wird.

Bei dem Füllstandssensor kann es sich aber auch um einen Vibrationssensor handeln. Zwecks Füllstandsmessung wird hier die Verstimmung der Resonanzfrequenz des Vibrationssensors herangezogen, die auftritt, sobald die Schwingstäbe des Vibrationssensors mit dem Füllgut in Kontakt kommen.

Ansatzbildung ist bei Vibrationssensoren immer dann kritisch, wenn sich die Ablagerungen nicht symmetrisch an den beiden Schwingstäben ausbilden. Als Beispiel für Vibrationsmeßsysteme seien der LIQIPHANT oder der SOLIPHANT genannt, die gleichfalls von der Anmelderin hergestellt und vertrieben werden.

Selbstverständlich ist - wie bereits an vorhergehender Stelle beschrieben - die mikrostrukturierte Oberfläche auch vorteilhaft in Verbindung mit einer Antenne, die Schall-, Ultraschall- oder elektromagnetische Wellen in Richtung der Oberfläche des Mediums aussendet.

Ganz allgemein betrachtet ist die erfindungsgemäße Vorrichtung jedoch nicht nur zur Messung des Füllstands eines Füllguts in einem Behälter geeignet, sondern sie ist in Verbindung mit jedwedem Sensortyp verwendbar, der eine beliebige physikalische Größen eines flüssigen oder festen Mediums messen kann und während des Meßvorgangs in Kontakt mit dem Medium kommt oder dem Einfluß des Mediums indirekt ausgesetzt ist. Bei den zuvor genannten physikalischen Größen kann es sich beispielsweise um den Druck, die Temperatur, die Feuchte, den Durchfluß oder den Massedurchfluß eines Mediums handeln. Durch die mikrostrukturierte Oberfläche des Sensorelements, das in mittelbaren oder unmittelbaren Kontakt mit dem Medium kommt, wird ein Anhaften des Mediums an dem entsprechenden Teilelement des Sensors wirkungsvoll vermieden bzw. vermindert.

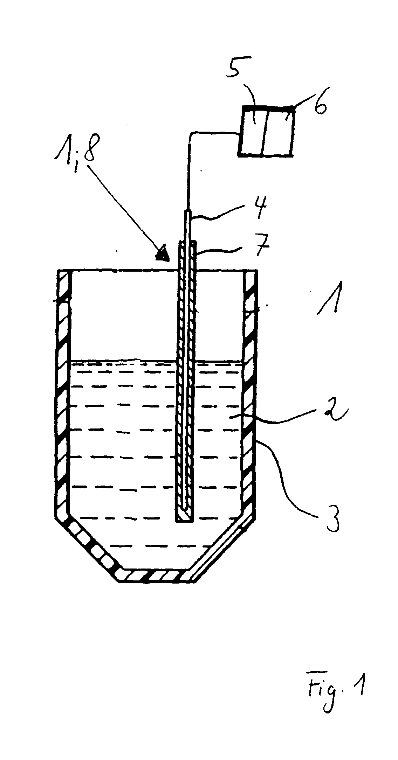

Die Erfindung wird anhand der einzigen Figur näher erläutert. Die Fig. 1 zeigt einen kapazitiven Sensor 1 für eine kontinuierliche Messung des Füllstandes eines Füllguts 2 in einem Behälter 3, der aus einem leitfähigen Material gefertigt ist. Der Sensor 1 besteht aus einem Sensorelement 4, im gezeigten Fall einer stabförmigen Sonde 4, einer Auswerteeinheit 5 und einer Anzeigeeinheit 6. Um innerhalb eines vorgegebenen Bereichs des Behälters 3 eine kontinuierliche Füllstandsmessung ausführen zu können, muß sich die stabförmige Sonde 4 über den gesamten zu überwachenden Bereich des Behälters 3 erstrecken. Die stabförmige Sonde 4 dient als erste Elektrode, während die Wand des Behälters 3 die zweite Elektrode bildet.

In dem Behälter 3 befindet sich das Füllgut 2, bei dem es sich um eine Flüssigkeit oder um einen Feststoff handeln kann. Das Sensorelement 4 taucht teilweise in das Füllgut 2 ein. Um das Sensorelement 4 vor Ansatzbildung zu schützen bzw. um bei Ansatzbildung die Reinigung des Sensorelements 4 zu vereinfachen, weist das Sensorelement 4 eine mikrostrukturierte Oberfläche 7 auf. Im gezeigten Fall handelt es sich übrigens um eine mikrostrukturierte Oberflächenschicht, die z. B. in Form eines Lacks auf das Sensorelement 4 aufgetragen ist. Wie bereits mehrfach erwähnt, setzt die mikrostrukturierte Öberflächenschicht 7 die Adhäsionswirkung zwischen dem Sensorelement 4 und dem Füllgut 2 stark herab.

## Patentansprüche

1. Vorrichtung zur Bestimmung einer physikalischen Größe eines flüssigen oder festen Mediums (2) in einem Behälter (3) oder in einem Behältnis, bestehend aus mehreren Teilelementen, wobei zumindest ein Teilelement (4) mit dem flüssigen oder festen Medium (2) mittelbar oder unmittelbar in Kontakt kommt und wobei das zumindest eine Teilelement (4) eine mikrostrukturierte Oberflächenschicht (7) aufweist.

2. Vorrichtung nach Anspruch 1,
wobei die mikrostrukturierte Oberflächenschicht (7) als Oberflächenbeschichtung auf das zumindest eine Teilelement (4) aufgebracht ist.

3. Vorrichtung nach Anspruch 1 oder 2,
wobei die mikrostrukturierte Oberfläche (7) Erhebungen und Vertiefungen aufweist und
wobei der Abstand zwischen den Erhebungen im Bereich von 5 bis 200 µm und die Höhe der Erhebungen im Bereich von 5 bis 100µm liegt.

4. Vorrichtung nach Anspruch 2 oder 3,
wobei die Oberflächenschicht (7) eine Lack- oder Farbschicht ist, die auf das zumindest eine Teilelement (4) aufgebracht ist.

5. Vorrichtung nach Anspruch 1, 2, 3 oder 4,
wobei es sich bei der physikalisch Größe um den Füllstand eines Füllguts (2) in dem Behälter (3) handelt.

6. Vorrichtung nach Anspruch 5,
wobei es sich bei dem zumindest einen Teilelement (4) um den Sondenteil eines kapazitiven Sensors handelt, der zwecks Füllstandsmessung mit dem Füllgut (2) in Kontakt kommt.

7. Vorrichtung nach Anspruch 5,
wobei es sich bei dem Teilelement (4) um die Schwingstäbe eines Vibrationssensors handelt.

8. Vorrichtung nach 5,
daß es sich bei dem Teilelement (4) um eine Antenne handelt, die Schall-, Ultraschall- oder elektromagnetische Wellen in Richtung der Oberfläche des Mediums aussendet, oder daß es sich bei dem Teilelement (4) um einen Wellenleiter (10) handelt, der die elektromagnetische Wellen in Richtung auf die Oberfläche des Füllguts (2) führt oder in das Füllgut (2) hineinführt.

9. Vorrichtung nach Anspruch 1, 2, 3 oder 4,
wobei es sich bei der physikalischen Größe um den Druck, die Temperatur, Feuchte oder den Durchfluß oder Massedurchfluß des Mediums handelt.
